# NOUVEAU FASCICULE DE BREVET EUROPEEN

(11) **EP 2 649 283 B2**
(45) Date de publication et mention de la décision concernant l'opposition: **25.07.2018**
(45) Mention de la délivrance du brevet: 07.01.2015
(21) Numéro de dépôt: 11802318.3
(22) Date de dépôt: 06.12.2011
(51) Int. Cl.: F02B 27/00, F02M 31/20, F02M 35/10, F02B 31/04, F02B 29/04

(54) **DISPOSITIF DE CANALISATION D'UN FLUX DE GAZ D'ALIMENTATION D'UN MOTEUR À COMBUSTION INTERNE**
VORRICHTUNG ZUR KANALISIERUNG EINES ZUFUHRGASSTROMS FÜR EINEN VERBRENNUNGSMOTOR
DEVICE FOR CHANNELING A FLOW OF FEED GAS FOR AN INTERNAL COMBUSTION ENGINE

(30) Priorité: 10.12.2010 FR 1060353
(43) Date de publication de la demande: 16.10.2013
(73) Titulaire: Valeo Systemes Thermiques, 78320 Le Mesnil Saint Denis (FR)
(72) Inventeur: GILLE, Gérard, 53270 Thorigné-en-Charnie (FR); BOISSELLE, Patrick, 53000 Laval (FR); POTTIER, Didier, 53970 L'Huisserie (FR)
(86) Numéro de dépôt international: PCT/EP2011/071870
(87) Numéro de publication internationale: WO 2012/076503

(56) Documents cités:
- WO-A1-2005/033489
- WO-A1-2008/061692
- WO-A1-2008/061850
- DE-A1- 19 604 738
- DE-A1-102004 049 027
- DE-A1-102006 048 667
- DE-A1-102008 047 079
- DE-U1-202009 001 782
- US-A1- 2003 079 707
- US-A1- 2007 175 456
- US-A1- 2009 272 515

## Description

L'invention concerne un dispositif de canalisation d'un flux de gaz d'alimentation d'un moteur à combustion interne, un boîtier d'admission d'un moteur à combustion interne et une boîte d'entrée d'air dudit boîtier d'admission, munis d'un tel dispositif de canalisation. Par gaz, il faut entendre l'air ou un mélange d'air et de gaz d'échappement.

L'invention trouvera en particulier ses applications comme dispositif d'admission de gaz, pour l'introduction desdits gaz dans la culasse d'un moteur à combustion interne de véhicule automobile.

Un moteur à combustion interne de véhicule automobile comporte une pluralité de chambres de combustion délimitées chacune par un piston, un cylindre et une portion d'une culasse. Ces chambres de combustion reçoivent un mélange de comburant et de carburant voués à être brûlés pour générer le travail du moteur. Le comburant comporte de l'air, qui peut être comprimé ou non, selon que le moteur comporte un turbocompresseur ou non. L'air peut par ailleurs être mélangé à des gaz d'échappement ; on parle de gaz d'échappement recirculés. Les gaz admis dans la chambre de combustion seront ci-après dénommés gaz d'alimentation.

Il est connu d'augmenter la densité de ces gaz d'alimentation en procédant à un refroidissement de ces derniers, par exemple en favorisant un échange thermique entre les gaz d'alimentation et un flux d'air extérieur au véhicule par l'intermédiaire d'un échangeur thermique air/air.

Il est également connu de réaliser ce refroidissement par échange entre les gaz d'alimentation et un fluide liquide qui circule dans un échangeur thermique traversé par les gaz d'alimentation. L'efficacité d'une telle solution dépend de l'utilisation de toute la surface frontale du faisceau de l'échangeur, et la répartition de la quantité de gaz d'alimentation sur l'ensemble de cette surface.

Malheureusement, l'espace disponible dans le compartiment du véhicule qui reçoit le moteur à combustion interne est limité. Il est difficile de concevoir des boîtiers ou conduits capables d'alimenter de manière homogène toute la surface de l'échangeur, en particulier dans le cas où le flux de gaz d'alimentation est parallèle au plan de la surface de l'échangeur qui reçoit ce flux. En outre, l'aire d'entrée du boîtier est généralement nettement inférieure à la surface de l'échangeur recevant le flux de gaz d'alimentation.

L'adjonction d'un déflecteur dans le conduit permet d'améliorer la situation mais ce dernier provoque des pertes de charge indésirables. Par ailleurs, ce déflecteur représente une pièce supplémentaire qui doit être ajoutée et fixée dans un boîtier d'admission de gaz d'alimentation ce qui complique sa fabrication.

Le but de la présente invention est de résoudre les inconvénients décrits ci-dessus principalement en créant un couvercle de boîtier d'entrée de gaz d'alimentation, autrement appelé boîtier d'admission, qui délimite au moins deux conduits pour canaliser ces gaz en des zones distinctes de la surface frontale de l'échangeur.

L'invention a donc pour objet un dispositif de canalisation d'un flux d'air d'admission, ou flux de gaz d'alimentation, d'un moteur à combustion interne, selon la revendication 1.

La paroi est ici constitutive du dispositif et on comprend que cette paroi présente une déformation qui s'étend sur une largeur inférieure à la largeur totale de la paroi, ladite déformation étant bordée latéralement par au moins un conduit dans lequel circule une partie du flux de gaz d'alimentation.

Selon une première caractéristique de l'invention, la première partie et la deuxième partie sont conformées pour modifier la direction du flux de gaz, ladite première partie ou déformation présentant un profil différent de la deuxième partie selon le sens de déplacement du flux de gaz vis-à-vis du dispositif. On garantit ainsi que le flux de gaz d'alimentation est envoyé en deux zones distinctes de la face de l'échangeur.

Selon une deuxième caractéristique de l'invention, le canal central et le canal latéral s'étendent côtes-à-côtes, au moins en partie. On comprend ici que ces canaux s'étendent tous deux longitudinalement et qu'ils sont installés immédiatement l'un à côté de l'autre.

L'aire de sortie du flux de gaz d'alimentation est définie, par exemple, par la paroi du dispositif, prévue terminée par un bord qui pourra délimiter à la fois une aire d'entrée et l'aire de sortie du flux de gaz d'alimentation.

Selon encore une caractéristique de l'invention, au moins une portion de l'aire de sortie s'étend selon un plan et ladite première partie de la paroi comprend une troisième zone qui s'étend dans un plan parallèle au plan de la portion plane de l'aire de sortie, dans le prolongement de la seconde zone, dans le sens de la direction du flux d'air.

Selon encore une autre caractéristique de l'invention, le plan de la troisième zone est confondu avec le plan de la portion plane de l'aire de sortie.

Les première, deuxième et/ou troisième zones de la première partie pourront être adjacentes.

La deuxième partie de la paroi présente une première surface courbée qui tourne sa concavité vers l'aire de sortie, ladite première surface courbée et lesdites première et deuxième zones courbées étant côtes-à-côtes, c'est-à-dire immédiatement adjacentes l'une par rapport aux autres.

Avantageusement, la deuxième partie de la paroi présente une deuxième surface courbée, située dans le prolongement de la première surface courbée dans le sens de l'écoulement du flux d'air, qui tourne sa convexité vers l'aire de sortie, ladite deuxième surface courbée et ladite troisième zone étant côtes-à-côtes c'est-à-dire immédiatement adjacentes l'un par rapport à l'autre.

Les première et deuxième surfaces de la deuxième partie pourront être adjacentes.

Avantageusement encore, le canal latéral est délimité par un premier flan terminé par le bord de la paroi du dispositif, par un fond et par un deuxième flan qui borde les première, deuxième et troisième zones, le premier flan, le fond et le deuxième flan étant constitutif de la paroi.

Le dispositif évoqué ci-dessus pourra comprendre en outre un troisième canal de circulation du flux de gaz délimité par une troisième partie de la paroi, distincte de la première partie et de la deuxième partie de la paroi.

Dans une telle situation, le canal central s'étend entre le canal latéral et le troisième canal. Le troisième canal pourra présenter un profil identique à celui du canal latéral.

Avantageusement, la première partie et la deuxième partie forment de manière unitaire ladite paroi. Au surplus, la troisième partie peut également être réalisée conjointement avec la première partie et la deuxième partie de sorte à former une paroi unitaire, éventuellement issue d'une même opération de fabrication à partir d'un même matériau.

L'invention concerne aussi une boite d'entrée d'air d'un boîtier d'admission d'un moteur à combustion interne comprenant un dispositif de canalisation tel que décrit plus haut.

Selon un mode de réalisation, il pourra s'agir d'une boîte destinée à être rapportée sur un corps du boîtier, ledit corps étant apte à recevoir l'échangeur.

L'invention couvre encore un boîtier d'admission d'un moteur à combustion interne apte à recevoir un échangeur de conditionnement thermique d'un flux de gaz d'alimentation circulant dans le boîtier, comprenant un dispositif de canalisation dudit flux de gaz selon l'une quelconque des caractéristiques décrites ci-dessus.

Dans un mode de réalisation, le boîtier comprend une section issue de matière dudit corps, ladite section présentant une ouverture fermée par ledit dispositif de canalisation.

L'invention concerne aussi un module d'admission d'air d'un moteur à combustion interne comprenant un boîtier tel que décrit plus haut et un échangeur de chaleur, prévu dans ledit boîtier.

Un tout premier avantage selon l'invention réside dans la possibilité d'alimenter en gaz d'admission de manière homogène toute la surface de l'échangeur. L'invention permet ainsi d'exploiter l'échangeur de manière équilibrée. On homogénéise le refroidissement du flux de gaz d'alimentation et évite ainsi la création de points chauds qui seraient nuisibles à l'équilibre de remplissage entre les chambres de combustion du moteur thermique. Le rendement global de l'échangeur est ainsi augmenté.

Un autre avantage réside dans la simplicité de réalisation d'un tel dispositif, ce dernier n'utilisant pas de pièce rapportée pour diriger le flux de gaz d'alimentation en différentes zones distinctes de la surface de l'échangeur de chaleur.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un boîtier d'admission d'un flux de gaz d'alimentation sur lequel est monté le dispositif selon l'invention,
- la figure 2 est une vue schématique du dispositif de canalisation selon une forme de réalisation de l'invention assemblé à un boîtier d'admission,
- la figure 3 est une vue en perspective d'un exemple de réalisation du dispositif selon l'invention.

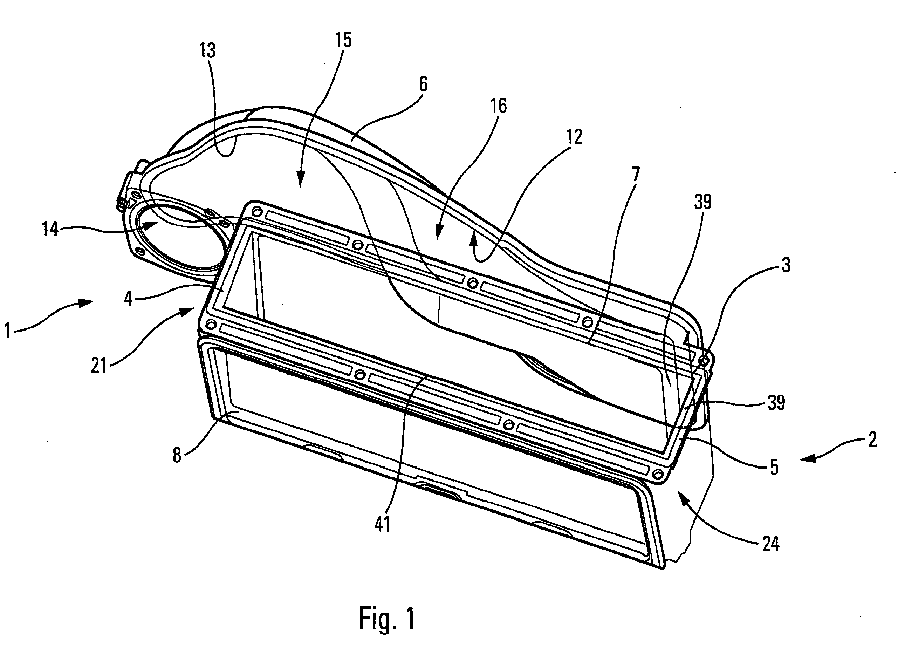

La figure 1 illustre un boîtier d'admission 1 voué à équiper un moteur à combustion interne d'un véhicule. Ce boîtier reçoit un exemple de réalisation d'un dispositif de canalisation 6 d'un flux de gaz d'alimentation de ce moteur. Sur cette figure, le boîtier est représenté en transparence et seules ses arêtes vives sont visibles, alors que le dispositif de canalisation est représenté de manière opaque. Le caractère transparent du boîtier rend visible la structure de ce dispositif, en particulier la forme de la paroi tournée vers l'intérieur du boîtier 1, cette forme étant ici une déformation.

Ce boîtier 1 comprend, par exemple, un corps 2, une boîte d'entrée d'air et une boîte de sortie d'air, non-représentée.

Le corps 2 est prévu apte à recevoir un échangeur 7, illustré ici par un parallélépipède transparent. Le corps 2 présente une forme générale par exemple parallélépipédique creuse. La partie évidée du corps 2 forme un logement 3 accessible par une ouverture 4 délimitée par un rebord 5. L'échangeur de chaleur 7 est installé dans le logement 3. L'échangeur 7 de conditionnement thermique comprend quatre tranches périphériques 39 qui délimitent un faisceau d'échange de chaleur traversé par le flux de gaz d'alimentation à refroidir. Ce faisceau est alors délimité par deux faces, une première face 40 étant tournée vers le dispositif selon l'invention alors qu'une deuxième face 41 est opposée à la première face 40 par rapport au faisceau.

Cet échangeur 7 est, par exemple, inséré par translation au travers de l'ouverture 8 et pourra fermer cette dernière à l'aide de moyens appropriés, par exemple par une face terminale de son faisceau.

Cet échangeur de chaleur 7 assure le conditionnement thermique d'un flux de gaz d'alimentation qui le traverse. Ce flux de gaz alimente la combustion interne du moteur et il est intéressant d'augmenter la densité de ce flux en le refroidissant, cette fonction étant assurée par l'échangeur de chaleur 7.

Cet échangeur de chaleur 7 est un échangeur air/liquide, c'est-à-dire un échangeur apte à transférer les calories présentes dans le flux de gaz d'alimentation vers un fluide caloporteur qui circule dans des canaux aménagés dans l'échangeur. Ce fluide caloporteur est par exemple une eau additionnée de glycol.

Il pourra s'agir d'un échangeur présentant un faisceau comprenant un empilement de plaques définissant de façon alternée des lames de circulation d'un premier fluide, par exemple l'air, et des lames de circulation d'un second fluide, par exemple le liquide. Les lames communiquent entre elles pour la circulation du second fluide. Les lames de circulation du premier fluide communique avec les faces d'entrée/sortie 40, 41 de l'échangeur.

En variante, il pourra s'agir d'un faisceau de tubes aptes à être parcourus par le premier fluide. Les faces d'entrée/sortie 40, 41 de l'échangeur sont alors munies de plaques collectrices au niveau desquels les tubes débouchent dans les boîtes d'entrée et de sortie d'air. Le second fluide circule dans le corps au contact des tubes.

Le corps 2 présente deux faces ouvertes, destinées à se trouver en correspondance chacune avec les faces 40 et 41 de l'échangeur traversée par le flux de gaz d'alimentation, lesdites faces ouvertes, respectivement appelées face d'entrée et de sortie du corps 2, étant prévues en regard d'une face ouverte de la boîte d'entrée et de la boîte de sortie.

Le corps 2 est délimité d'un côté par une première paroi latérale 21 et une deuxième paroi latérale 24 opposée à la première paroi latérale par rapport au logement 3. La première paroi latérale 21 et la deuxième paroi latérale 24 s'étendent dans des plans parallèles, ou sensiblement parallèles.

Une première section, non-représentée, de la boîte de sortie s'étend, par exemple, depuis la face de sortie du corps 2. Cette première section est obstruée par un fond de sorte à délimiter un conduit de circulation qui canalise le flux de gaz d'alimentation en direction de bouches d'évacuation de la boîte de sortie d'air, lesdites bouches d'évacuation étant raccordées sur une culasse coiffant le moteur à combustion interne.

Du côté opposé à la première section par rapport au logement 3 recevant l'échangeur de chaleur, la boîte d'entrée d'air comprend une deuxième section 12 bordée périphériquement par un renfort 13.

La boîte d'entrée d'air comprend encore une bouche d'amission 14 par laquelle le flux de gaz d'alimentation, notamment en provenance d'un compresseur ou d'un turbocompresseur, entre dans un volume interne définit par les parois du boîtier 1. Le flux de gaz d'alimentation circule depuis la bouche d'admission 14 et vers l'échangeur de chaleur 7, ce qui permet de définir un sens de circulation ou de déplacement de ce flux vis-à-vis du dispositif selon l'invention.

On notera que le plan dans lequel la bouche d'admission 14 s'étend est parallèle, et notamment confondu, au plan dans lequel s'étend la face 40 de l'échangeur qui fait immédiatement face au dispositif de canalisation 6 selon l'invention, cette face pouvant également être appelée surface frontale de l'échangeur.

La première section 8 et/ou la seconde section 12 sont, par exemple, issues de matière du corps 2.

La deuxième section 12 est fermée par le dispositif de canalisation 6 selon l'invention. Ce dernier forme ainsi un couvercle dont la fonction est de conduire ou canaliser ce dernier vers la face 40 de l'échangeur. On comprend alors que le dispositif de canalisation 6 est en regard de l'échangeur puisqu'au moins une partie de ce dispositif fait immédiatement face à l'échangeur 7.

Ce dispositif de canalisation 6 est conformé pour définir un canal central 15 et un canal latéral 16 distinct du canal central 15 et dans lesquels le flux de gaz d'alimentation circule.

Le canal central 15 est délimité par une première partie d'une paroi 17 du dispositif. Il est destiné à canaliser le flux de gaz vers une première zone d'une face de l'échangeur, notamment située au plus près de bouche d'admission 14. Le canal latéral 16 est délimité par une deuxième partie de la paroi 17. Il est destiné à canaliser le flux de gaz vers une deuxième zone de ladite face de l'échangeur, notamment située au plus loin de la bouche d'admission 14. On favorise de la sorte la répartition de l'air.

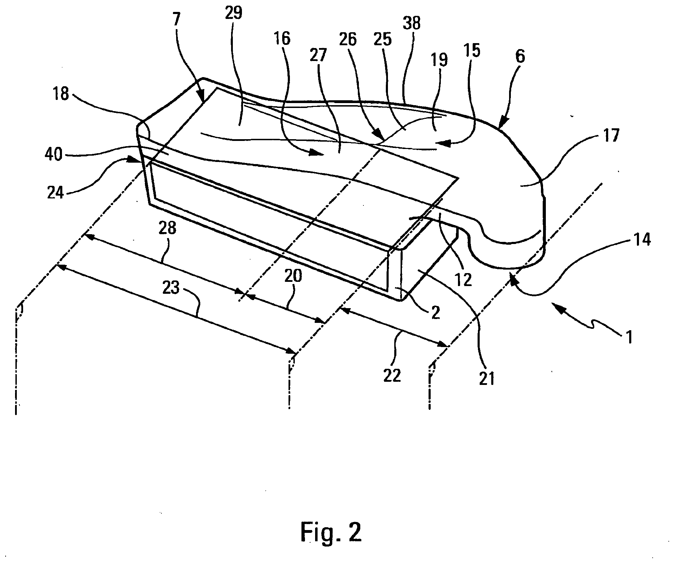

La figure 2 illustre ces canaux 15 et 16 selon une vue de dessus du boîtier d'admission 1. A cette figure, on peut noter que la boîte de sortie d'air n'a pas été illustrée.

La paroi 17 se termine par un bord 18 de forme complémentaire à la forme du renfort 13 délimitant la deuxième section 12 du boîtier. Ce bord 18 forme ainsi un moyen de connexion qui s'étend périphériquement à la lisière de la paroi 17.

Le bord 18 délimite deux portions du dispositif de canalisation 6 séparées virtuellement l'une de l'autre par un plan passant par la première paroi latérale 21 du corps 2 située entre la bouche d'admission 14 et l'échangeur de chaleur 7. Une première portion est appelée aire d'entrée 22 car c'est une zone où le flux de gaz d'alimentation est en phase d'introduction dans le dispositif de canalisation 6. Une deuxième portion est appelée aire de sortie 23 car elle correspond à une portion du dispositif où le flux de gaz d'alimentation est voué à sortir de ce dernier. Cette aire de sortie 23 est délimitée par le plan passant par la première paroi latérale 21 et par un plan passant par la seconde paroi latérale 24 du corps 2. Autrement dit, elle est en regard de la face ouverte de la boîte d'entrée d'air.

Le canal central 15 est délimité ou bordé en son fond par une première partie 19 de la paroi 17, cette première partie étant ici formée par une portion centrale de la paroi selon un axe transversal au dispositif. La première partie 19 de la paroi 17 est conformée pour modifier la direction du flux de gaz et l'envoyer vers une première zone 20 de la face frontale 40 de l'échangeur de chaleur 7. Cette première zone 20 est formée par la surface de l'échangeur qui est la plus proche de la bouche d'admission 14. Cette conformation est mise en oeuvre notamment par une première zone courbée 25 de la première partie 19 de la paroi. Cette première zone courbée 25 tourne sa concavité vers l'aire de sortie 23, et plus exactement vers la première paroi latérale 21 du corps 2. Autrement dit, la première zone courbée 25 tourne sa concavité vers la face ouverte de la boîte d'entrée d'air destinée à se trouver en correspondance de la face d'entrée du corps 2.

Cette première zone courbée 25 se trouve, selon le sens de circulation du flux d'air, dans le prolongement de l'aire d'entrée 22. Prises ensemble, elles présentent, par exemple, une forme de portion de cylindre de section sensiblement circulaire dont l'axe se trouve, notamment, dans le plan de la première paroi latérale 21 du corps 2 et/ou dont le rayon serait de l'ordre du cinquième de la longueur de la boîte d'entrée.

Cette première zone courbée 25 se poursuit, dans le sens de la circulation du flux d'air, de manière immédiatement adjacente, par une deuxième zone courbée 26 dont la courbure est orientée de manière opposée à la courbure de la première zone courbée 25. En d'autres termes, la deuxième zone courbée 26 tourne sa concavité vers l'extérieur du boîtier. De manière corrélative, la convexité de la deuxième zone courbée 26 est ainsi tournée vers la face 40 de l'échangeur, autrement dit vers l'aire de sortie 23.

La première partie 19 comprend encore une troisième zone 29 qui s'étend dans un plan parallèle à au moins une portion du plan de l'aire de sortie 23, cette portion étant ici celle qui est immédiatement adjacente à la deuxième paroi latérale 24 du corps 2. Cette troisième zone 29 est plane et poursuit la deuxième zone courbée 26 dans le sens de la circulation du flux d'air. Selon une variante, le plan dans lequel s'étend cette troisième zone 29 est confondu au plan de la portion évoquée ci-dessus. Autrement dit, elle est parallèle à la face ouverte de la boîte d'entrée d'air.

Le canal latéral 16 est délimité ou bordé par une deuxième partie 27 de la paroi 17 distinct de la première partie 19 de la paroi 17. Cette deuxième partie 27 de la paroi 17 borde latéralement le dispositif selon l'invention. Le canal latéral 16 débute au niveau de l'aire d'entrée 22 sensiblement dans le plan de la première paroi latérale 21 formant le corps 2 et se poursuit sur toute la longueur de l'aire de sortie 23. Comme le canal central 15 débute également dans le plan de cette première paroi latérale 21, on comprend que le canal central 15 et le canal latéral 16 s'étendent longitudinalement l'un à côté de l'autre depuis cette zone.

La deuxième paroi 27 est agencée pour modifier la direction du flux de gaz d'alimentation et ainsi l'envoyer vers une deuxième zone 28 de la face 40 de l'échangeur 7, cette dernière étant formée par la partie du plan passant par la face 40 de l'échangeur opposée à la bouche d'admission 14 par rapport à la première zone 20 de la face 40 de l'échangeur.

On notera que la première partie 19 de paroi est placée avant la deuxième partie 27 de paroi selon le sens de circulation du flux d'air. Autrement dit, la première partie 19 est en amont de la deuxième partie 27, ces deux parties formant la paroi 17.

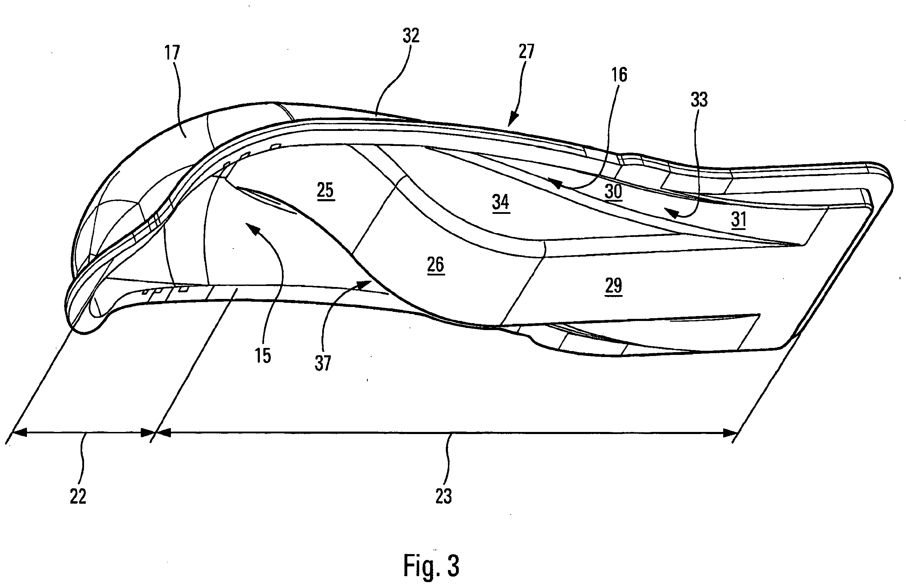

La figure 3 est une perspective du dispositif de canalisation selon l'invention. Le canal central 15 est délimité par la première partie 19 de la paroi 17, cette première partie 19 étant formée par la première zone courbée 25 suivie de la deuxième zone courbée 26 au bout de laquelle s'étend la troisième zone rectiligne 29.

Le canal latéral 16 est délimité par la deuxième partie 27 de la paroi 17 et présente en son fond une première surface courbée 30 qui tourne sa concavité vers l'aire de sortie 23. Cette première surface courbée 30 est immédiatement adjacente latéralement aux première et deuxième zones 25 et 26 définissant le canal central 15. La deuxième partie 27 comprend encore une deuxième surface courbée 31 qui s'étend dans le prolongement de la première surface courbée 30, dans le sens de circulation du flux d'air et qui tourne sa convexité vers l'aire de sortie 23, sa concavité étant ainsi tournée vers l'extérieur du boîtier fermé par le dispositif selon l'invention. On notera enfin que la deuxième surface courbée 31 est immédiatement adjacente latéralement, c'est-à-dire côte-à-côte, à la troisième zone 29 qui fait partie de la première partie 19 de la paroi 17.

Le canal latéral 16 est délimité par un premier flan 32 qui s'étend longitudinalement le long du dispositif selon l'invention. Ce canal latéral 16 est également délimité par un fond 33 constitutif de la paroi 17. Enfin, le canal latéral 16 est délimité par un deuxième flan 34 constitutif de la paroi 17, ce deuxième flan s'étendant du fond 33, ou autrement dit de la première et deuxième surface 30 et 31, jusqu'au première, deuxième et troisième zones 25, 26 et 29. Ce premier flan 32, ce fond 33 et ce deuxième flan 34 matérialisent la deuxième partie 27 de la paroi 17 qui délimite le canal latéral 16.

Le dispositif de canalisation 6 illustré sur la figure 3 comprend un troisième canal 37 de circulation du flux de gaz. Ce troisième canal est délimité par une troisième partie (référence 38 sur la figure 2) de la paroi 17. Ce troisième canal 37 est par exemple conformé de manière identique à la forme du canal latéral 16 et on se reportera à la description du canal latéral 16 pour en comprendre la constitution. Dans une telle situation, le troisième canal 37 canalise le flux de gaz d'alimentation vers la deuxième zone 28 de l'échangeur de chaleur 7.

Alternativement, ce troisième canal 37 peut être agencé pour modifier la direction du flux de gaz d'alimentation et le diriger vers une troisième zone de l'échangeur distincte de la première zone 20 et distincte de la deuxième zone 28 de la face 40 de l'échangeur. On comprend ainsi que, dans cette alternative, le troisième canal 37 est délimité par une partie de paroi 17 qui prend une forme différente de la première partie de paroi qui définit le canal central 15, et différente de la deuxième partie de paroi qui définit le canal latéral 16.

Selon encore une autre variante applicable aux deux solutions évoqués ci-dessus en présence des trois canaux 15, 16 et 37, le canal central 15 s'étend entre le canal latéral 16 et le troisième canal 37. Ainsi, le canal central 15 est bordé d'un côté par le canal latéral 16 et de l'autre par le troisième canal 37 au moins dans le prolongement de la première zone 25 formant la première partie de paroi du canal central 15.

Le dispositif de canalisation selon l'invention est réalisé de manière unitaire. On comprend ainsi que le canal central 15 et le canal latéral 16 sont moulés simultanément, dans un même moule et à partir d'un même matériau. Dans le cas où le dispositif incorpore un troisième canal 37, ce dernier est réalisé de manière unitaire avec le premier et le canal latéral. On comprend ainsi que le bord 18, la paroi 17 conformée pour délimiter le canal central, le canal latéral et éventuellement le troisième canal sont issues de matière et forme une seule et même pièce.

La paroi 17 pourra aussi présenter des nervures, non-représentées, dont la fonction est de renforcer mécaniquement la paroi 17.

On peut également noter qu'un avantage du dispositif conforme à l'invention est qu'il permet à la boîte équipée de disposer d'une rigidité renforcé grâce, notamment, aux flans 34 qui définissent par eux-mêmes des nervures de renforcement.

## Revendications

1. Dispositif de canalisation (6) d'un flux de gaz d'alimentation d'un moteur à combustion interne, ledit dispositif (6) étant apte à être installé au moins en regard d'un échangeur (7) de conditionnement thermique du flux de gaz, le dispositif comprend un premier canal (15), de circulation du flux de gaz et destiné à canaliser le flux de gaz vers une première zone (20) d'une face (40) de l'échangeur (7), ledit dispositif comprenant au moins un deuxième canal (16), de circulation du flux de gaz et destiné à canaliser le flux de gaz vers une deuxième zone (28) de ladite face (40) de l'échangeur (7), le premier canal (15), dit central, de circulation du flux de gaz étant délimité par une première partie (19) d'une paroi (17) et étant destiné a canaliser le flux de gaz vers une première zone (20) d'une face (40) de l'échangeur (7), et le deuxième canal (16), dit latéral, de circulation du flux de gaz délimité par une deuxième partie (27) de la paroi (17) et destiné à canaliser le flux de gaz vers une deuxième zone (28) de ladite face (40) de l'échangeur (7), ledit dispositif de canalisation (6) étant conformé pour définir le canal central (15) de circulation du flux de gaz et le canal latéral (16) de circulation du flux de gaz distinct dudit canal central (15) de circulation du flux de gaz, et le dispositif de canalisation (6) comprenant une aire de sortie (23) du flux de gaz, **caractérisé en ce que** la première partie (19) de la paroi (17) étant formée par une première zone courbée (25) qui tourne sa concavité vers l'aire de sortie (23) et par une deuxième zone courbée (26), située dans le prolongement de la première zone (25) dans le sens de la direction du flux d'air, ladite deuxième zone courbée (26) tournant sa convexité vers ladite aire de sortie (23).

2. Dispositif selon la revendication 1, dans lequel la première partie (19) et la deuxième partie (27) sont conformées pour modifier la direction du flux de gaz, ladite première partie ou déformation (19) présentant un profil différent de la deuxième partie selon le sens de déplacement du flux de gaz.

3. Dispositif selon l'une quelconque des revendications précédentes, dans lequel le canal central (15) et le canal latéral (16) s'étendent côtes-à-côtes, au moins en partie.

4. Dispositif selon l'une quelconque des revendications précédentes, dans lequel au moins une portion de l'aire de sortie (23) s'étend selon un plan et dans lequel ladite première partie (19) de la paroi (17) comprend une troisième zone (29) qui s'étend dans un plan parallèle au plan de la portion plane de l'aire de sortie (23), dans le prolongement de la seconde zone (26) dans le sens de la direction du flux d'air.

5. Dispositif selon la revendication 4, dans lequel le plan de la troisième zone (29) est confondu avec le plan de la portion plane de l'aire de sortie (23).

6. Dispositif selon l'une quelconque des revendications 4 à 5, dans lequel la deuxième partie (27) de la paroi (17) présente une première surface courbée (30) qui tourne sa concavité vers l'aire de sortie (23), ladite première surface courbée (30) et lesdites première et deuxième zones courbées (25, 26) étant côtes-à-côtes.

7. Dispositif selon la revendication 6, dans lequel la deuxième partie (27) de la paroi (17) présente une deuxième surface courbée (31) située dans le prolongement de la première surface courbée (30) dans le sens de la circulation du flux d'air et qui tourne sa convexité vers l'aire de sortie (23), ladite deuxième surface courbée (31) et ladite troisième zone (29) étant côtes-à-côtes.

8. Dispositif selon l'une quelconques des revendications précédentes, comprenant un troisième canal (37) de circulation du flux de gaz délimité par une troisième partie (38) de la paroi (17).

9. Dispositif selon la revendication 8, dans lequel le canal central (15) s'étend entre le canal latéral (16) et le troisième canal (37).

10. Dispositif selon la revendication 9 dans lequel le troisième canal (37) présente un profil identique à celui du canal latéral (16).

11. Boîte d'entrée d'air d'un boîtier d'admission d'un moteur à combustion interne comprenant un dispositif de canalisation selon l'une quelconque des revendications 1 à 10.

12. Boîtier d'admission (1) d'un moteur à combustion interne apte à recevoir un échangeur (7) de conditionnement thermique d'un flux de gaz d'alimentation circulant dans le boîtier, ledit boîtier comprenant un dispositif de canalisation (6) dudit flux de gaz selon l'une quelconques des revendications 1 à 10.

13. Boîtier selon la revendication 12 comprenant un corps (2), apte à recevoir l'échangeur (7), et une section (12) issue de matière dudit corps (2), ladite section (12) présentant une ouverture fermée par ledit dispositif de canalisation (6).

14. Module d'admission d'air d'un moteur à combustion interne comprenant un boîtier selon l'une quelconque des revendications 12 ou 13 et un échangeur de chaleur, prévu dans ledit boîtier.

## Patentansprüche

1. Vorrichtung (6) zum Leiten eines Zufuhrgasstroms für einen Verbrennungsmotor, wobei die Vorrichtung (6) dazu ausgeführt ist, zumindest gegenüber einem Tauscher (7) zur thermischen Aufbereitung des Gasstroms installiert zu werden, wobei die Vorrichtung einen ersten Kanal (15) zur Zirkulation des Gasstroms, der den Gasstrom zu einer ersten Zone (20) einer Fläche (40) des Tauschers (7) leiten soll, umfasst, wobei die Vorrichtung mindestens einen zweiten Kanal (16) zur Zirkulation des Gasstroms umfasst, der den Gasstrom zu einer zweiten Zone (28) der Fläche (40) des Tauschers (7) leiten soll, wobei der erste Kanal (15), der so genannte Mittelkanal, zur Zirkulation des Gasstroms durch einen ersten Teil (19) einer Wand (17) begrenzt wird und den Gasstrom zu einer ersten Zone (20) einer Fläche (40) des Tauschers (7) leiten soll und der zweite Kanal (16), der so genannte Seitenkanal, zur Zirkulation des Gasstroms durch einen zweiten Teil (27) der Wand (17) begrenzt wird und den Gasstrom zu einer zweiten Zone (28) der Fläche (40) des Tauschers (7) leiten soll, wobei die Leitungsvorrichtung (6) dahingehend konfiguriert ist, den Mittelkanal (15) zur Zirkulation des Gasstroms und den Seitenkanal (16) zur Zirkulation des Gasstrom, der von dem Mittelkanal (15) zur Zirkulation des Gasstroms verschieden ist, zu definieren, und die Leitungsvorrichtung (6) einen Gasstromauslassbereich (23) umfasst, **dadurch gekennzeichnet, dass** der erste Teil (19) der Wand (17) durch eine erste gekrümmte Zone (25), deren Konkavität zum Auslassbereich (23) gewandt ist, und durch eine zweite gekrümmte Zone (26), die sich in der Richtung, in die der Luftstrom gerichtet ist, in der Verlängerung der ersten Zone (25) befindet, wobei die Konvexität der zweiten gekrümmten Zone (26) zum Auslassbereich (23) gerichtet ist, gebildet wird.

2. Vorrichtung nach Anspruch 1, wobei der erste Teil (19) und der zweite Teil (27) zum Modifizieren der Richtung des Gasstroms konfiguriert sind, wobei der erste Teil oder die Verformung (19) ein Profil aufweist, das sich von dem des zweiten Teils in Bewegungsrichtung des Gasstroms unterscheidet.

3. Vorrichtung nach einem der vorhergehenden Ansprüche, wobei sich der Mittelkanal (15) und der Seitenkanal (16) zumindest teilweise nebeneinander erstrecken.

4. Vorrichtung nach einem der vorhergehenden Ansprüche, wobei sich mindestens ein Abschnitt des Auslassbereichs (23) entlang einer Ebene erstreckt und wobei der erste Teil (19) der Wand (17) eine dritte Zone (29) aufweist, die sich in einer parallel zur Ebene des ebenen Abschnitts des Auslassbereichs (23) verlaufenden Ebene in der Richtung, in die der Luftstrom gerichtet ist, in der Verlängerung der zweiten Zone (26) erstreckt.

5. Vorrichtung nach Anspruch 4, wobei die Ebene der dritten Zone (29) mit der Ebene des ebenen Abschnitts des Auslassbereichs (23) zusammenfällt.

6. Vorrichtung nach einem der Ansprüche 4 bis 5, wobei der zweite Teil (27) der Wand (17) eine erste gekrümmte Oberfläche (30) aufweist, deren Konkavität zum Auslassbereich (23) gerichtet ist, wobei sich die erste gekrümmte Oberfläche (30) und die erste und die zweite gekrümmte Zone (25, 26) nebeneinander befinden.

7. Vorrichtung nach Anspruch 6, wobei der zweite Teil (27) der Wand (17) eine zweite gekrümmte Oberfläche (31) aufweist, die sich in der Richtung der Zirkulation des Luftstroms in der Verlängerung der ersten gekrümmten Fläche (30) befindet und deren Konvexität zum Auslassbereich (23) gerichtet ist, wobei sich die zweite gekrümmte Oberfläche (31) und die dritte Zone (29) nebeneinander befinden.

8. Vorrichtung nach einem der vorhergehenden Ansprüche, die einen dritten Kanal (37) zur Zirkulation des Gasstroms umfasst, der durch einen dritten Teil (38) der Wand (17) begrenzt wird.

9. Vorrichtung nach Anspruch 8, wobei sich der Mittelkanal (15) zwischen dem Nebenkanal (16) und dem dritten Kanal (37) erstreckt.

10. Vorrichtung nach Anspruch 9, wobei der dritte Kanal (37) ein Profil aufweist, das mit dem des Seitenkanals (16) identisch ist.

11. Lufteintrittskasten eines Ansauggehäuses eines Verbrennungsmotors mit einer Leitungsvorrichtung nach einem der Ansprüche 1 bis 10.

12. Lufteintrittskasten (1) eines Verbrennungsmotors, der zur Aufnahme eines Tauschers (7) zur thermischen Aufbereitung eines im Gehäuse zirkulierenden Zufuhrgasstroms ausgeführt ist, wobei das Gehäuse eine Vorrichtung (6) zum Leiten des Gasstroms nach einem der Ansprüche 1 bis 10 umfasst.

13. Gehäuse nach Anspruch 12, das einen Körper (2), der den Tauscher (7) aufnehmen kann, und einen Abschnitt (12) umfasst, der als integraler Teil des Körpers (2) ausgebildet ist, wobei der Abschnitt (12) eine Öffnung aufweist, die durch die Leitungsvorrichtung (6) geschlossen ist.

14. Luftansaugmodul eines Verbrennungsmotors mit einem Gehäuse nach Anspruch 12 oder 13 und in dem Gehäuse vorgesehener Wärmetauscher.

## Claims

1. Device (6) for channeling a stream of feed gas for an internal combustion engine, said device (6) being able to be installed at least facing an exchanger (7) for the thermal conditioning of the stream of gas, the device comprises a first canal (15) for the circulation of the stream of gas intended to channel the stream of the gas toward a first zone (20) of a face (40) of the exchanger (7), said device comprising at least one second canal (16) for the circulation of the stream of gas intended to channel the stream of gas toward a second zone (28) of said face (40) of the exchanger (7), the first canal (15), referred to as central canal, for the circulation of the stream of gas, being delimited by a first part (19) of a wall (17) and being intended to channel the stream of the gas toward a first zone (20) of a face (40) of the exchanger (7), and the second canal (16), referred to as lateral canal, for the circulation of the stream of gas, being delimited by a second part (27) of the wall (17) and intended to channel the stream of gas toward a second zone (28) of said face (40) of the exchanger (7), said channeling device (6) being configured to define the central canal (15) for the circulation of the stream of gas and the lateral canal (16) for the circulation of the stream of gas, distinct from the central canal for the circulation of the stream of gas and the channeling device (6) comprising a gas stream outlet section (23), **characterized in that** the first part (19) of the wall (17) is formed by a first curved zone (25) with its concave side facing toward the outlet section (23) and by a second curved zone (26), situated in the continuation of the first zone (25) in the direction in which the stream of air is directed, said second curved zone (26) having its convex side facing toward said outlet section (23).

2. Device according to Claim 1, in which the first part (19) and the second part (27) are configured to alter the direction of the stream of gas, said first part or deformation (19) having a profile that differs from that of the second part in the direction of travel of the stream of gas.

3. Device according to either one of the preceding claims, in which the central canal (15) and the lateral canal (16) run side by side, at least in part.

4. Device according to any one of the preceding claims, in which at least one portion of the outlet section (23) extends in one plane and in which said first part (19) of the wall (17) comprises a third zone (29) which extends in a plane parallel to the plane of the planar portion of the outlet section (23), in the continuation of the second zone (26) in the direction in which the stream of air is directed.

5. Device according to Claim 4, in which the plane of the third zone (29) coincides with the plane of the planar portion of the outlet section (23).

6. Device according to either one of Claims 4 and 5, in which the second part (27) of the wall (17) has a first curved surface (30) with its concave side facing toward the outlet section (23), said first curved surface (30) and said first and second curved zones (25, 26) being side by side.

7. Device according to Claim 6, in which the second part (27) of the wall (17) has a second curved surface (31) situated in the continuation of the first curved surface (30) in the direction in which the stream of air circulates and which has its convex side facing toward the outlet section (23), said second curved surface (31) and said third zone (29) being side by side.

8. Device according to any one of the preceding claims, comprising a third canal (37) for the circulation of the stream of gas and delimited by a third part (38) of the wall (17).

9. Device according to Claim 8, in which the central canal (15) extends between the lateral canal (16) and the third canal (37).

10. Device according to Claim 9, in which the third canal (37) has a profile identical to that of the lateral canal (16).

11. Air inlet box of an intake airbox of an internal combustion engine, comprising a channeling device according to any one of Claims 1 to 10.

12. Intake airbox (1) of an internal combustion engine able to accept an exchanger (7) for thermally conditioning a stream of feed gas circulating through the airbox, said airbox comprising a device (6) for channeling said stream of gas according to any one of Claims 1 to 10.

13. Airbox according to Claim 12 comprising a body (2), able to accept the exchanger (7), and a portion (12) formed as an integral part of said body (2), said portion (12) having an opening which is closed by said channeling device (6).

14. Air intake module of an internal combustion engine comprising an airbox according to either one of Claims 12 and 13 and a heat exchanger, provided inside said airbox.
